# EUROPÄISCHE PATENTSCHRIFT

(11) **EP 0 556 623 B1**
(45) Veröffentlichungstag und Bekanntmachung des Hinweises auf die Patenterteilung: **29.11.1995**
(21) Anmeldenummer: 93101462.5
(22) Anmeldetag: 30.01.1993
(51) Int. Cl.: B29D 30/58

(54) **Runderneuerungsvorrichtung**
Recapping apparatus
Appareil de rechapage

(30) Priorität: 03.02.1992 DE 4203027
(43) Veröffentlichungstag der Anmeldung: 25.08.1993
(73) Patentinhaber: A-Z Formen und Maschinenbau GmbH, D-80992 München (DE)
(72) Erfinder: Hilke, Rainer, W-8137 Berg 1 (DE); Schmaderer, Gerhard, W-8490 Cham (DE)
(74) Vertreter: Baronetzky, Klaus, Dipl.-Ing.

(56) Entgegenhaltungen:
- US-A- 4 206 009
- US-A- 4 596 617

## Beschreibung

Die Erfindung betrifft eine Runderneuerungsvorrichtung für Reifen, gemäß dem Oberbegriff von Anspruch 1.

Bei derartigen Runderneuerungsvorrichtungen ist es bekannt, eine Bindegummischicht, die die sichere Verbindung zwischen der abgeschälten Karkasse und dem Laufstreifen herstellen soll, zu extrudieren. Hierbei ist es bekannt, die Bindegummischicht auf den Laufstreifen aufzubringen.

Ferner ist es aus der DE-OS 40 12 695 bekannt, die Bindegunmischicht direkt auf die Karkasse aufzubringen, indem ein Extruder entsprechend angesteuert wird.

Schließlich ist es aus der US-PS 3 308 000 bekannt, ein relativ dünnes Gummiband in mehreren Lagen formzuwickeln. Die Justierung von Wickelvorrichtung und Karkasse läßt sich bei diesem Verfahren über ein Stellschraubensystem einstellen, wobei Andruckrollen für das aus dem Extruder austretende Band schwenkbeweglich gelagert sind.

Die bekannten Runderneuerungsvorrichtungen erfordern jedoch insbesondere beim Runderneuern von Großreifen erhebliche physische Anstrengungen für den Bediener. Dem steht nicht entgegen, daß die Extruder selbst horizontal verschiebbar gelagert sein können. Eine derartige Lagerung bedingt entsprechend präzise Führungseinrichtungen für die translatorische Bewegung.

Dementsprechend liegt der Erfindung die Aufgabe zugrunde, eine Runderneuerungsvorrichtung für Reifen gemäß dem Oberbegriff von Anspruch 1 zu schaffen, die trotz verminderter Herstellkosten eine vereinfachte Bedienung bei dennoch mindestens gleichbleibender Belegequalität und -Geschwindigkeit bietet.

Diese Aufgabe wird erfindungsgemäß durch Anspruch 1 gelöst.

Vorteilhafte Weiterbildungen ergeben sich aus den Unteransprüchen.

Die erfindungsgemäße Runderneuerungsvorrichtung für Reifen bietet zunächst auf sehr einfache Weise die Möglichkeit des Größenausgleichs auch unterschiedlicher Karkassengrößen: Mit der erfindungsgemäßen Schräghub-Lagervorrichtung läßt sich die Karkasse stets von der bodennahen Beschickungsstellung in eine extrudernahe Bindegummi-Belegestellung bringen, wobei dennoch die erwünschte senkrechte Ausrichtung zwischen dem Düsenmundstück des Extruders und der zu belegenden Karkassenoberfläche sichergestellt sein kann.

Hierzu ist es bei Ausbildung der Schräghub-Lagervorrichtung als Schwenkhebel lediglich erforderlich, den Lagerpunkt des Schwenkhabels entsprechend zu wählen, so daß sich höchstens minimale Winkelabweichungen zwischen der Extrusionsrichtung und der radialen Richtung der Karkasse ergeben. Bei Ausbildung der Schräghub-Lagervorrichtung in Form einer schiefen Ebene kann dies durch eine entsprechende Wahl der Neigung ebenfalls sichergestellt sein.

Besonders günstig ist es, daß sich die bislang erforderlichen Hebebühnen für die Verbringung der Karkasse auf die gewünschte Höhe zum Einspannen der Karkasse vollständig entfallen können. Vielmehr kann die Karkasse bodennah, jedoch leicht entlastet entnommen werden, während für das Einspannen eine noch leicht weiter abgesenkte Stellung in Frage kommt.

Besonders günstig ist es, daß mit der erfindungsgemäßen Schräghub-Lagervorrichtung die Möglichkeit eröffnet wird, in einer Zwischenstellung das Belegen des Laufstreifens vorzunehmen. Hierzu wird einfach eine auf der dem Extruder abgewandten Seite vorgesehene Hebelscheibe mit einer Andrückrolle in den Bewegungsbereich der Karkasse geklappt. Die Karkasse stützt sich dann auf der Andruckrolle ab, wobei die Hebelscheibe einen Anschlag bildet.

Die Andrückkraft kann durch vorwählbare Zustellschritte eines entsprechenden Spindelhubgetriebes erhöht oder vermindert werden. Ggf. kann die Andrückkraft auch über einen Sensor gemessen werden.

Die insbesondere auf der Hebelscheibe schwenkbare Lagerung der Andrückrolle erlaubt somit die schnelle und in einem Zuge kombinierte Abfolge der Belegearbeiten, indem nämlich zunächst in der extrudernahen Stellung die Bindegummischicht aufgebracht wird, in welcher Stellung die Andrückrolle eingeklappt wird, dann die Karkasse auf die Andrückrolle zu abgesenkt wird, so daß der Laufstreifen aufgebracht und angerollt werden kann, dann erneut leicht angehoben wird, um die Andrückrolle in die ausgeklappte Position zu bringen, und dann die Karkasse erneut abgesenkt wird, um die Entnahme der nunmehr belegten Karkasse zu ermöglichen. Gegebenenfalls kann bei der Belegung von Laufstreifen mit Wings nach dem Aufbringen des Laufstreifens zusätzlich über eine separate einklappbare Vorrichtung ein Anrollvorgang für die Wings durchgeführt werden, bevor diese Vorrichtung ebenfalls ausgeklappt und dann die Karkasse zur Entnahme abgesenkt wird.

Es versteht sich, in einer vorteilhaften Ausgestaltung die Hebelscheibe mit mehreren Laufrollen für die Zuführung des Laufstreifens versehen sein kann, wie es auch bei üblichen Laufstreifen-Zuführvorrichtungen vorgesehen ist, die der Hebelscheibe vorgeschaltet sein können.

Auch kann das Einklappen der Andrückrolle, die gemäß der bevorzugten Ausgestaltung auf einer Hebelscheibe angebracht ist, automatisch die Zufuhr des Laufstreifens starten, während eine 360°-Drehung der Karkasse als Signal für die Beendigung des Laufstreifens-Zuführvorgangs verwendet werden kann.

Es versteht sich, daß anstelle der Hebelscheibe ebenfalls eine andere, translatorische Lagerung der Andrückrolle in Betracht kommt, wobei durch die Wahl der Bewegungsbahn der Andrückrolle den jeweiligen Belegerfordernissen, Reifengrößen und verwendeten Techniken in weiten Bereichen Rechnung getragen werden kann.

Auch ist es möglich, anstelle des hier als vorteilhaft erläuterten CTC(cushion to casing)-Verfahrens ein CTT(cushion to tread)-Verfahren zu verwenden. Hierbei entfällt zwar der Vorteil, daß in einem Zuge das Aufbringen der Bindegummischicht auf die Karkasse selbst erfolgen kann. Dennoch läßt sich günstig mit der erfindungsgemäßen Schräghub-Lagervorrichtung und der Schwenklagerung der Andrückrolle die erforderliche Anhebung und Absenkung der Karkasse mit dem gewünschten Anpreßdruck verwirklichen.

Die Neigung der Bewegungsbahn der erfindungsgemäßen Schräghub-Lagervorrichtung kann im Grenzfall bis zu 90° gegenüber der Horizontalen betragen, beispielsweise wenn dies aus Platzgründen erforderlich ist.

Weitere Einzelheiten, Vorteile und Merkmale ergeben sich aus der nachfolgenden Beschreibung eines Ausführungsbeispiels anhand der Zeichnung.

Es zeigen:
- Fig. 1: eine Ansicht einer erfindungsgemäßen Runderneuerungsvorrichtung in einer Ausführungsform in der bodennah abgesenkten Stellung der Karkasse;
- Fig. 2: das Ausführungsbeispiel gemäß Fig. 1, wobei die Karkasse sich in der extrudernahen Stellung befindet; und
- Fig. 3: das Ausführungsbeispiel gemäß Fig. 1, wobei der Laufstreifen aufgebracht wird.

Eine erfindungsgemäße Runderneuerungsvorrichtung 10 besteht aus einem Extruder 12, einer Laufstreifen-Zuführvorrichtung 14 und einer Lagervorrichtung 16 für eine Karkasse 18.

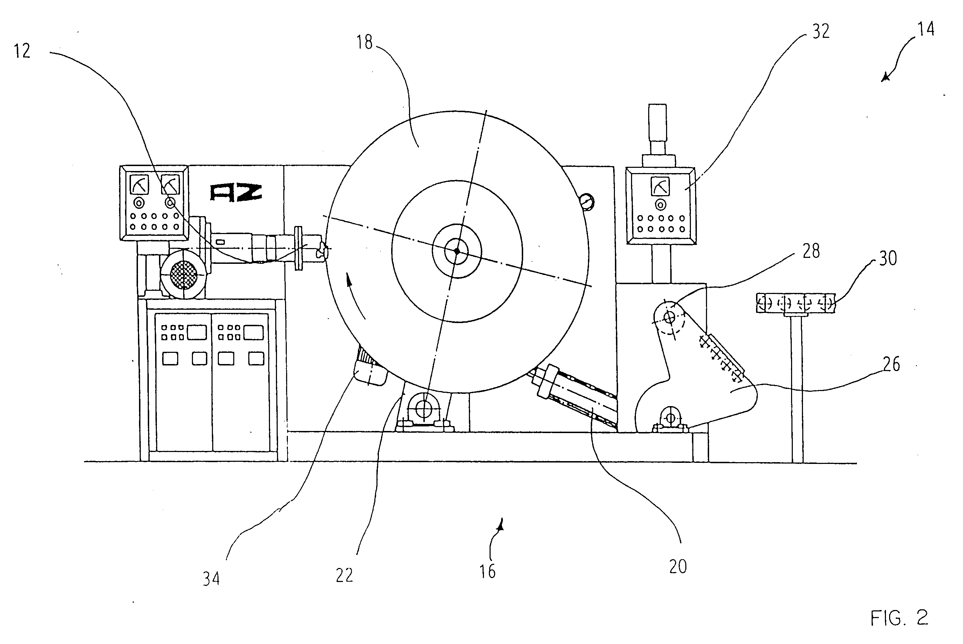

Die Lagervorrichtung ist erfindungsgemäß als Schräghub-Lagervorrichtung 16 ausgebildet und weist eine Betätigungsvorrichtung 20, die aus Fig. 2 besser ersichtlich ist und als Spindelhubgetriebe ausgebildet ist, und einen Schwenkhebel 22 auf.

Der Schwenkhebel ist an dem Rahmen der Runderneuerungsvorrichtung 10 in einem stabilen Schwenklager 24 gelagert und weist an seinem anderen Ende eine nicht im einzelnen dargestellte und durch die Karkasse 18 verdeckte Einspannvorrichtung für die Nabe der Karkasse 18 auf. Die Betätigungsvorrichtung 20 weist ein Spindelhubgetriebe mit elektronisch regelbarem Antrieb auf und dient der Betätigung der Schräghub-Lagervorrichtung 16 zur Verbringung der Karkasse 18 in die je gewünschte Stellung.

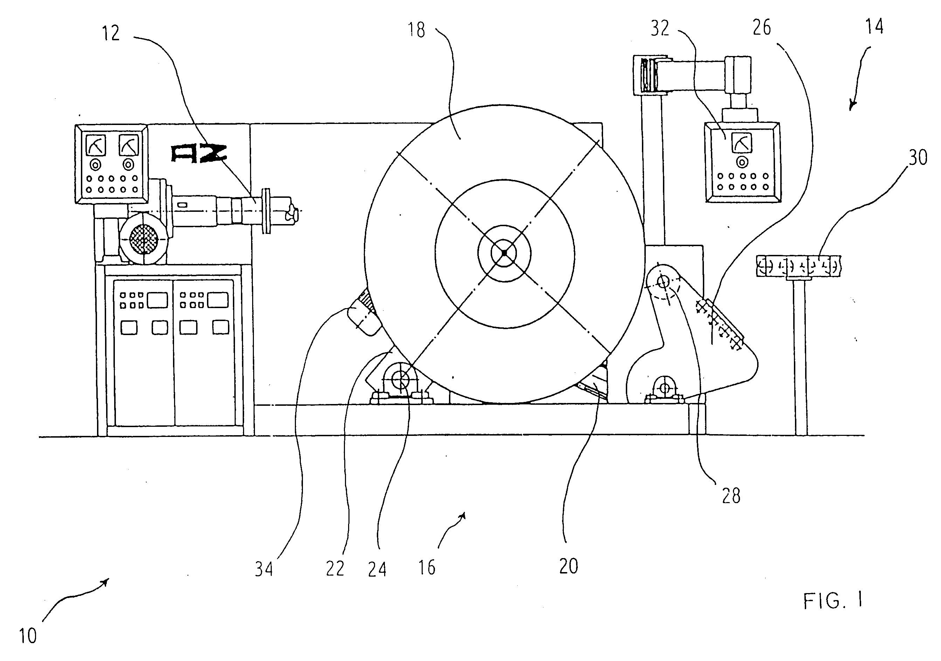

Im in Fig. 1 dargestellten Ausführungsbeispiel der Erfindung weist die Laufstreifen-Zuführvorrichtung ferner eine schwenkbeweglich gelagerte Hebelscheibe 26 auf, die eine Andrückrolle 28 trägt. In der in Fig. 1 dargestellten Stellung ist die Hebelscheibe 26 in der ausgeklappten Stellung, d.h., die Andrückrolle 28 ist außerhalb des Bewegungsbereichs der Karkasse 18.

Zwischen den beiden beweglich gelagerten Hebelscheiben 26 befindet sich eine auf der Achse der Andruckrolle 28 schwenkbar gelagerte Wings-Anrollvorrichtung, die im einzelnen nicht dargestellt ist und durch die Hebelscheibe 26 verdeckt ist.

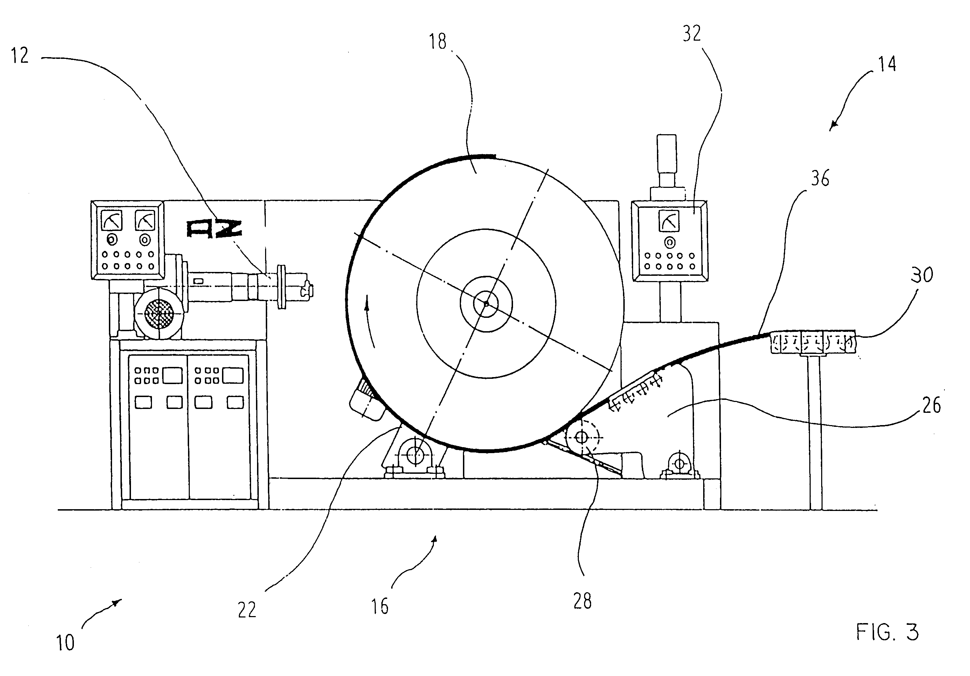

Die Laufstreifen-Zuführvorrichtung 14 weist ferner eine an sich bekannte feststehende Rollenbahn 30 auf, über welche ein Laufstreifen - wie aus Fig. 3 ersichtlich - zuführbar ist.

In dem dargestellten Ausführungsbeispiel ist eine Bedieneinheit 32 für die Steuerung der Belegearbeit ebenfalls seitlich verschwenkbar gelagert, damit sie ebenfalls außerhalb des Bewegungsbereichs der Karkasse 18 bleiben kann.

Aus Fig. 2 ist ersichtlich, daß die Karkasse 18 über die Schräghub-Lagervorrichtung 16 bzw. deren Betätigungsvorrichtung 20 in eine extrudernahe Bindegummi-Belegestellung verschwenkt werden kann. In dieser Stellung erstreckt sich die Extrusionsrichtung im wesentlichen radial zur Karkasse 18, und die Karkasse 18 wird über einen Motor 34 um etwa 360° gedreht, um eine Belegung mit der Bindegummischicht in der gewünschten Weise sicherzustellen.

Während in der Beschickungsstellung der Schwenkwinkel des Schwenkhebels 22 gegenüber der Horizontalen etwa 48° beträgt, beträgt dieser in der extrudernahen Stellung gemäß Fig. 2 etwa 77°. Wird eine Karkasse mit kleinerem Durchmesser verwendet, sinkt der erste Wert und steigt der zweite Wert je in entsprechender Weise. Dennoch ist eine im wesentlichen radiale Beschickung durch den Extruder 12 sichergestellt, da der Lagerpunkt des Schwenkhebels 22 entsprechend gewählt ist.

Während der Bindegummi-Extrusion wird nun die Hebelscheibe 26 in die in Fig. 3 dargestellte eingeklappte Stellung gebracht. Die Hebelscheibe 26 weist hierzu einen entsprechenden Anschlag an dem Rahmen der Runderneuerungsvorrichtung 10 auf, die sie in die Lage versetzt, in der eingeklappten Stellung das Gewicht der Karkasse 18 zu tragen.

Über die Betätigungsvorrichtung 20 wird die Karkasse 18 nach Fertigstellung der Bindegummi-Aufbringung in die in Fig. 3 dargestellte Laufstreifen-Belegestellung geschwenkt. In dieser Stellung stützt sich die Karkasse mit ihrem Außenumfang an der Andrückrolle 28 ab, so daß ein nunmehr zugeführter Laufstreifen 36 aufgedrückt wird. Die Andrückkraft läßt sich hierbei durch die Betätigungsvorrichtung 20 in der gewünschten Weise einstellen.

In dieser Stellung wird die Karkasse 18 erneut um 360° gedreht. Die Schwenkstellung des Schwenkhebels 22 beträgt bei dem dargestellten Ausführungsbeispiel und der dargestellten Reifengröße etwa 63° gegenüber der Horizontalen.

Zur Abwicklung einer zügigen Bewegung ist es vorgesehen, die Zufuhr des Laufstreifens 36 so rechtzeitig einzuleiten, daß der Laufstreifen 36 sich bereits im Bereich der Hebelscheibe 26 befindet, wenn die Karkasse 18 in die in Fig. 3 dargestellte Stellung verschwenkt wird. Nach Auftragen der Bindegummischicht kann die Karkasse 18 sich weiter drehen, so daß das Auftragen des Laufstreifens sofort beginnt, wenn die Andrückrolle 28 den gewünschten Anpreßdruck erhält.

Sofort nach Fertigstellung der Laufstreifen-Belegung wird der Laufstreifen angerollt. Hierbei wird mit etwa 4-facher Belegegeschwindigkeit die Karkasse 18 in Rotation versetzt und durch einzelne Zustellschritte des Spindelhubgetriebes der Betätigungsvorrichtung 20 die Karkasse gegen die Andrückrolle 28 gepreßt. Nach dem Anrollvorgang wird die Betätigungsvorrichtung 20 angehoben, um die Hebelscheibe 26 in die ausgeklappte Stellung zu bringen.

Bei der Belegung von Laufstreifen mit Wings wird nun nach dem Anrollen des Laufstreifens eine separate Wings-Anrollvorrichtung eingeklappt, die auf den Achsen der Andrückrolle 28 schwenkbar gelagert ist. Über die Betätigungsvorrichtung 20 wird die Karkasse 18 nach unten an die Anrollräder für die Wings geschwenkt.

Sofort nach Beendigung des Wingsanrollvorgangs kann die Karkasse 18 über die Betätigungsvorrichtung 20 erneut angehoben werden, um die Wings-Anrollvorrichtung 26 in die ausgeklappte Stellung zu bringen.

In dieser Stellung kann die Karkasse 18 dann in die bodennahe Stellung gemäß Fig. 1 abgesenkt werden, und die fertig belegte Karkasse entnommen werden, damit im Rahmen der nachfolgenden Abheizung in einem Dampfkessel in an sich bekannter Weise der runderneuerte Reifen fertiggestellt werden kann.

## Patentansprüche

1. Runderneuerungsvorrichtung für Reifen, bei welcher ein Laufstreifen auf eine Karkasse belegbar ist, mit einer Laufstreifen-Zuführvorrichtung für die Zuführung des Laufstreifens zu der Karkasse, mit einem Extruder für die Extrusion einer Bindegummischicht, und mit einer Lagervorrichtung für die drehbewegliche Lagerung der Karkasse gegenüber dem Extruder und/oder der Laufstreifen-Zuführvorrichtung, dadurch gekennzeichnet, daß eine Schräghub-Lagervorrichtung (16) die Karkasse (18) lagert.

2. Runderneuerungsvorrichtung nach Anspruch 1, dadurch gekennzeichnet, daß die Schräghub-Lagervorrichtung (16) einen Schwenkhebel (22) aufweist, der an einem bodenfesten Schwenklager (24) gelagert ist.

3. Runderneuerungsvorrichtung nach einem der vorhergenenden Ansprüche, dadurch gekennzeichnet, das die Schräghub-Lagervorrichtung (16) zwischen einer Belegestellung, in welcher die Karkasse (18) dem Extruder (12) benachbart ist, und einer Beschickungsstellung, in welcher die Karkasse (18) an der Schräghub-Lagervorrichtung (16) ein- und ausspannbar ist, verschwenkbar ist.

4. Runderneuerungsvorrichtung nach einem der vorhergehenden Ansprüche, dadurch gekennzeichnet, daß die Schräghub-Lagervorrichtung (16) in zwei unterschiedliche Belegestellungen bewegbar ist, nämlich eine Bindegummi-Belegestellung und eine Laufstreifen-Belegestellung.

5. Runderneuerungsvorrichtung nach Anspruch 4, dadurch gekennzeichnet, daß die Laufstreifen-Belegestellung zwischen einer Beschickungstellung für die Karkasse (18) und der Bindegummi-Belegungsstellung vorgesehen ist und einen Anschlag aufweist.

6. Runderneuerungsvorrichtung nach einem der vorhergehenden Ansprüche, dadurch gekennzeichnet, daß die Schräghub-Lagervorrichtung (16) in eine Beschickungsstellung bewegbar ist, in welcher die Karkasse (18) entlastet den Boden berührt, und daß die Schräghub-Lagervorrichtung (16) gegenüber der Beschickungsstellung um weniger als 90° verschwenkbar ist.

7. Runderneuerungsvorrichtung nach einem der vorhergehenden Ansprüche, dadurch gekennzeichnet, daß der Lagerpunkt der einen Schwenkhebel (22) aufweisenden Schräghub-Lagervorrichtung (16) - bezogen auf diese - dem Extruder (12) zugewandt ist.

8. Runderneuerungsvorrichtung nach einem der vorhergehenden Ansprüche, dadurch gekennzeichnet, daß eine schwenkbare Laufstreifen-Andruckvorrichtung (26) vorgesehen ist, die insbesondere den Anschlag gemäß Anspruch 5 bildet.

9. Runderneuerungsvorrichtung nach einem der vorhergehenden Ansprüche, dadurch gekennzeichnet, daß eine Laufstreifen-Andruckvorrichtung (26), mit welcher der Laufstreifen (36) unter Zwischenschaltung der Bindegummischicht an die Karkasse (18) andrückbar ist, eine Führungsbahn für den (36) Laufstreifen aufweist, die insbesondere einer Andrückrolle (28) vorgeschaltet ist.

10. Runderneuerungsvorrichtung nach einem der vorhergehenden Ansprüche, dadurch gekennzeichnet, daß eine Laufstreifen-Andruckvorrichtung (26) eine Andrückrolle (28) aufweist, mit welcher das Gewicht der Karkasse (18) in einer Laufstreifen-Belegestellung der Schräghub-Lagervorrichtung (16) einschließlich der Schräghub-Lagervorrichtung (16) anteilig abstützbar ist.

11. Runderneuerungsvorrichtung nach einem der vorhergehenden Ansprüche, dadurch gekennzeichnet, daß in einer Laufstreifen-Belegestellung der Schräghub-Lagervorrichtung (16) das Gewicht der Karkasse (18) teils über eine Nabe der Karkasse (18) und teils über einer Andrückrolle (28) einer Laufstreifen-Andruckvorrichtung (26) abgestützt ist, wobei der Gewichtsanteil der Andrückrolle (28) etwa die Hälfte und insbesondere etwas mehr als die Hälfte beträgt.

12. Runderneuerungsvorrichtung nach einem der vorhergehenden Ansprüche, dadurch gekennezeichnet, daß ein auf der Andrückrolle (28) einer Laufstreifen-Andruckvorrichtung (26) lastender Gewichtsanteil der Karkasse (18) durch die Betätigungsvorrichtung (20) für die Schräghub-Lagervorrichtung (20) einstellbar ist.

13. Runderneuerungsvorrichtung nach einem der vorhergehenden Ansprüche, dadurch gekennzeichnet, daß eine Laufstreifen-Andrückvorrichtung als Hebelscheibe (26) ausgebildet ist, die nur in einer Bindegummi-Belegestellung der Schräghub-Lagervorrichtung (16) zwischen Ihren Endpositionen verschwenkbar ist.

14. Runderneuerungsvorrichtung nach einem der vorhergehenden Ansprüche, dadurch gekennzeichnet, daß eine untere Endstellung, in welche eine Laufstreifen-Andrückvorrichtung (26) schwenkbar ist, einen bodenfesten Anschlag für die Laufstreifen-Andrückvorrichtung bildet.

15. Runderneuerungsvorrichtung nach einem der vorhergehenden Ansprüche, dadurch gekennzeichnet, daß die translatorische Bewegung in horizontaler Richtung der Schräghub-Lagervorrichtung (16) und die translatorische Bewegung der Schräghub-Lagervorrichtung (16) in der hierzu senkrechten Richtung in einem Zuge konibiniert in Form einer kreisbogenförmigen Schwenkbewegung erfolgt, wobei das Ausmaß der Bewegung erheblich geringer als der Karkassen-Durchmesser ist.

16. Runderneuerungsvorrichtung nach einem der vorhergehenden Ansprüche, dadurch gekennzeichnet, daß ein Antriebsmotor (34) für den Drehantrieb der Karkasse an einem Schwenkhebel (22) der Schräghub-Lagervorrichtung (16) angebaut ist.

17. Runderneuerungsvorrichtung nach einem der vorhergehenden Ansprüche, dadurch gekennzeichnet, daß die Betätigungsvorrichtung (20) für die Bewegung der Schräghub-Lagervorrichtung (16) ein Spindelhubgetriebe aufweist, das, etwa im Bereich einer Laufstreifen-Andruckvorrichtung (26) angelenkt ist.

18. Runderneuerungsvorrichtung nach einem der vorhergehenden Ansprüche, gekennzeichnet durch eine zusätzliche separate einklappbare Anrollvorrichtung, mit welcher nach dem Aufbringen des Laufstreifens (36) Wings anrollbar sind.

## Claims

1. A retreading device for tyres in which a tread strip is applicable to a carcass, comprising a tread strip feeding device for feeding the tread strip to the carcass, an extruder for extruding a rubber binding layer, and a support means for pivotably supporting the carcass relative to said extruder and/or said tread strip feeding device, characterized in that an inclined lifting support (16) supports the carcass (18).

2. A retreading device according to claim 1, characterized in that said inclined lifting support (16) comprises a pivot arm (22) which is supported at a pivot (24) fixedly connected to the ground.

3. A retreading device according to one of the preceding claims, characterized in that said inclined lifting support (16) is pivotable between a first position, in which the carcass (18) is adjacent to said extruder (12) for applying the rubber binding layer, and a second position, in which said carcass (18) can be loaded on and removed from said inclined lifting support (16).

4. A retreading device according to one of the preceding claims, characterized in that said inclined lifting support (16) is movable in two different application positions, namely a position for applying the rubber binding layer and a position for applying the tread strip.

5. A retreading device according to claim 4, characterized in that the position for applying the tread strip is provided between a position for loading and removing said carcass (18) and the position for applying the rubber binding layer and in that it comprises an abutment.

6. A retreading device according to one of the preceding claims, characterized in that said inclined lifting support (16) is movable into a position for loading and removing, in which said carcass (18) is relieved and touches the ground, and in that said inclined lifting support (16) is pivotable by less than 90° relative to the position for loading and removing.

7. A retreading device according to one of the preceding claims, characterized in that the point of support of said inclined lifting support (16) comprising a pivot arm (22) is facing said extruder (12) - with respect to said inclined lifting support (16).

8. A retreading device according to one of the preceding claims, characterized in that a pivotable tread strip pressing device (26) is provided, preferably but optionally forming said abutment according to claim 5.

9. A retreading device according to one of the preceding claims, characterized in that a tread strip pressing device (26), with which the tread strip (36) can be pressed against said carcass (18) having applied thereto the rubber binding layer, comprises a guiding path for said tread strip (36) particulary arranged before a pressing roller (28).

10. A retreading device according to one of the preceding claims, characterized in that a tread strip pressing device (26) comprises a pressing roller (28), with which the weight of said carcass (18) in a position of said inclined lifting support (16) for applying the tread strip, including said inclined lifting support (16), can be supported in part.

11. A retreading device according to one of the preceding claims, characterized in that when said inclined lifting support (16) is in a position for applying the tread strip the weight of said carcass (18) is in part supported by a hub of said carcass (18) and in part by a pressing roller (28) of a tread strip pressing device (26), said pressing roller (28) supporting about 50 % and particularly somewhat more than 50 % of the weight of the carcass.

12. A retreading device according to one of the preceding claims, characterized in that a portion of the weight of said carcass (18) supported by the pressing roller (28) of a tread strip pressing device (26) is adjustable by the actuating device (20) for said inclined lifting support (16).

13. A retreading device according to one of the preceding claims, characterized in that a tread strip pressing device is formed as a plate lever (26) pivotable between its end positions only when said inclined lifting support (16) is in a position for applying the rubber binding layer.

14. A retreading device according to one of the preceding claims, characterized in that a lower end position, into which a tread strip pressing device (26) can be pivoted, provides an abutment for said tread strip pressing device at the ground.

15. A retreading device according to one of the preceding claims, characterized in that the translatory movement of said inclined lifting support (16) in the horizontal direction and the translatory movement of said inclined lifting support (16) in the vertical direction thereto are combined into a circular arc-shaped pivoting movement, the extent of the movement being substantially smaller than the diameter of the carcass.

16. A retreading device according to one of the preceding claims, characterized in that a drive motor for rotating the carcass is connected to a pivot arm of said inclined lifting support (16).

17. A retreading device according to one of the preceding claims, characterized in that said actuating device (20) for moving said inclined lifting support (16) is a spindle-type displacing gear arranged about in the area of said tread strip pressing device (26).

18. A retreading device according to one of the preceding claims, characterized by an additional separate foldable pressing device with which after the application of the tread strip (36) wings can be pressed onto the carcass by rolling.

## Revendications

1. Dispositif de rechapage pour pneus, dans lequel une bande de roulement peut être disposée sur une carcasse, comportant un dispositif d'amenée de bande de roulement pour l'acheminement de la bande de roulement vers la carcasse, comportant une extrudeuse pour l'extrusion d'une couche de caoutchouc de liaison, et comportant un dispositif de réception pour la réception mobile en rotation de la carcasse par rapport à l'extrudeuse et/ou du dispositif d'amenée de la bande de roulement, caractérisé en ce qu'un dispositif de réception à élévation oblique (16) reçoit la carcasse (18).

2. Dispositif de rechapage selon la revendication 1, caractérisé en ce que le dispositif de réception à élévation oblique (16) comporte un levier pivotant (22) fixé sur un roulement pivotant (24) solidaire du sol.

3. Dispositif de rechapage selon l'une des revendications précédentes, caractérisé en ce que le dispositif de réception (16) à élévation oblique est pivotant entre une position de revêtement, dans laquelle la carcasse (18) est rapprochée de l'extrudeuse (12), et une position de chargement, dans laquelle la carcasse (18) peut être bloquée et débloquée dans le dispositif de réception à élévation oblique (16).

4. Dispositif de rechapage selon l'une des revendications précédentes, caractérisé en ce que le dispositif de réception à élévation oblique (16) est apte à être déplacé dans deux positions de revêtement distinctes, notamment une position de revêtement de caoutchouc de liaison, et une position de revêtement de bande de roulement.

5. Dispositif de rechapage selon la revendication 4, caractérisé en ce que la position de revêtement de bande de routement est prévue entre une position de chargement pour la carcasse (18) et la position de revêtement de caoutchouc de liaison, et présente un arrêt.

6. Dispositif de rechapage selon l'une des revendications précédentes, caractérisé en ce que le dispositif de réception à élévation oblique (16) est apte à être déplacé dans une position de chargement, dans laquelle la carcasse (18) touche le sol sans pression, et en ce que le dispositif de réception à élévation oblique (16) est pivotant de moins de 90° par rapport à la position de chargement.

7. Dispositif de rechapage selon l'une des revendications précédentes, caractérisé en ce que le point de réception du dispositif de réception à élévation oblique (16) présentant un levier pivotant (22) est, par rapport audit dispositif de réception, orienté vers l'extrudeuse (12).

8. Dispositif de rechapage selon l'une des revendications précédentes, caractérisé en ce qi'il est prévu un dispositif de pression (26) de la bande de roulement pivotant, qui forme en particulier l'arrêt selon la revendication 5.

9. Dispositif de rechapage selon l'une des revendications précédentes, caractérisé en ce qu'un dispositif de pression de bande de roulement (26), à l'aide duquel la bande de roulement (36) peut être pressée contre la carcasse (18) avec intercalage de la couche de caoutchouc de liaison, comporte une piste de guidage pour la bande de roulement (36), qui est en particulier placée en amont d'un rouleau de pression.

10. Dispositif de rechapage selon l'une des revendications précédentes, caractérisé en ce qu'un dispositif de pression de bande de roulement (26) comporte un rouleau de pression (28), à l'aide duquel le poids de la carcasse (18) peut être réparti de façon proportionnelle dans une position de revêtement de la bande de roulement du dispositif de réception (16) à élévation oblique et du dispositif de réception (16) à élévation oblique.

11. Dispositif de rechapage selon l'une des revendications précédentes, caractérisé en ce que dans une position de revêtement de la bande de roulement du dispositif de réception (16) à élévation oblique, le poids de la carcasse (18) est appuyé en partie sur un moyeu de la carcasse (18) et en partie sur un rouleau de pression (28) d'un dispositif de pression (26) de la bande de roulement, la proportion du poids sur le rouleau de pression (28) représentant environ la moitié et en particulier un peu plus de la moitié.

12. Dispositif de rechapage selon l'une des revendications précédentes, caractérisé en ce qu'une partie du poids de la carcasse (18) reposant sur le rouleau de pression (28) d'un dispositif de pression (26) d'une bande de roulement, est réglable pour le dispositif de réception à élévation oblique (20), par l'intermédiaire du dispositif d'actionnement (20).

13. Dispositif de rechapage selon l'une des revendications précédentes, caractérisé en ce qu'un dispositif de pression de bande de revêtement est conformé en plateau à levier (26), lequel n'est pivotant entre ses positions extrêmes que dans une position de revêtement de caoutchouc de liaison du dispositif de réception (16) à élévation oblique.

14. Dispositif de rechapage selon l'une des revendications précédentes, caractérisé en ce qu'une position extrême inférieure, dans laquelle un dispositif de pression (26) de bande de roulement peut être pivoté, forme un arrêt fixe pour le dispositif de pression de la bande de roulement.

15. Dispositif de rechapage selon l'une des revendications précédentes, caractérisé en ce que le mouvement en translation dans une direction horizontale du dispositif de réception (16) à élévation oblique et le mouvement en translation du dispositif de réception (16) à élévation oblique dans la direction verticale a cet effet sont combinés au cours d'un mouvement de pivotement en forme d'arc de cercle, l'amplitude du mouvement étant beaucoup plus faible que le diamètre de la carcasse.

16. Dispositif de rechapage selon l'une des revendications précédentes, caractérisé en ce que le moteur d'entraînement (34) pour l'entraînement en rotation de la carcasse, est fixé à un levier pivotant (22) du dispositif de réception (16) à élévation oblique.

17. Dispositif de rechapage selon l'une des revendications précédentes, caractérisé en ce que le dispositif d'actionnement (20) pour la mise en mouvement du dispositif de réception (16) à élévation oblique, comporte un engrenage à déplacement de broche, qui est articulé à proximité de la zone du dispositif de pression (26) de bande de roulement.

18. Dispositif de rechapage selon l'une des revendications précédentes, caractérisé par un dispositif d'enroulement additionnel distinct repliable, à l'aide duquel des champs peuvent être enroulés après mise en place de la bande de roulement(36).
